# EUROPEAN PATENT APPLICATION

(11) **EP 4 697 815 A1**
(43) Date of publication of application: **18.02.2026**
(21) Application number: 24802999.3
(22) Date of filing: 08.05.2024
(51) Int. Cl.: H04W 52/02

(54) **COMMUNICATION METHOD AND COMMUNICATION APPARATUS**

(30) Priority: 08.05.2023 CN 202310513292; 24.07.2023 CN 202310918175
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); HUANG, Guogang, Shenzhen, Guangdong 518129 (CN); GAN, Ming, Shenzhen, Guangdong 518129 (CN)
(74) Representative: Gill Jennings & Every LLP
(86) International application number: PCT/CN2024/091650
(87) International publication number: WO 2024/230719

(57) **Abstract**

This application relates to the communication field, and in particular, to a communication method and a communication apparatus. The solutions may be applied to a WLAN system that supports a next-generation Wi-Fi protocol of IEEE 802.11ax, for example, 802.11be, Wi-Fi 7, or EHT, and for another example, 802.11 series protocols such as a next-generation protocol of 802.11be, and Wi-Fi 8. According to this application, a first AP may send a first radio frame to a second AP, to request the second AP to modify an RTWT parameter of at least one RTWT agreement. This facilitates enhanced transmission in a multi-AP coordination scenario and improves communication quality.

## Description

### TECHNICAL FIELD

Embodiments of this application relate to the communication field, and more specifically, to a communication method and a communication apparatus.

### BACKGROUND

A target wake time (target wake time, TWT) is a technology defined in Wi-Fi 6 for power saving, and means that a station (station, STA) and an access point (access point, AP) may agree on a TWT service period (service period, SP), remain active and perform communication in the TWT SP, and sleep in a time other than the TWT SP, to save power. According to a method for agreeing on the TWT SP, the TWT may be classified into an individual (individual) TWT and a broadcast (broadcast) TWT.

A restricted TWT (restricted TWT, RTWT) is a special broadcast TWT type, and an RTWT SP defined in the restricted TWT is used to serve a low-latency service. To ensure that the AP obtains a channel through contention in the RTWT SP and performs low-latency service communication with the STA, a STA having obtained a transmission opportunity (transmission opportunity, TXOP) needs to terminate the TXOP before the RTWT SP arrives.

In a multi-AP coordination scenario, a STA associated with an AP (for example, an AP 1) not only needs to terminate a TXOP before an RTWT SP of the AP 1 arrives, but also needs to terminate a TXOP before an RTWT SP of a neighboring AP of the AP 1 arrives. If the AP 1 has many neighboring APs (each neighboring AP may also have a plurality of RTWT agreements), the STA associated with the AP 1 needs to terminate the TXOP in advance a plurality of times. Consequently, communication quality is affected.

### SUMMARY

Embodiments of this application provide a communication method, to implement enhanced transmission in a multi-access point (access point, AP) coordination scenario, and improve communication quality.

According to a first aspect, a communication method is provided. The method may be performed by a communication device, or may be performed by a component (for example, a chip or a circuit) of a communication device. This is not limited. For ease of description, the following uses an example in which the method is performed by a first AP for description.

The method includes: The first AP sends a first radio frame to a second AP, where the first radio frame is used to request to modify an RTWT parameter of at least one restricted target wake time (restricted target wake time, RTWT) agreement of the second AP; and the first AP receives a second radio frame from the second AP, where the second radio frame is a response frame of the first radio frame.

Based on the foregoing technical solution, the first AP may send the first radio frame to a neighboring AP (for example, the second AP), to request the second AP to modify the RTWT parameter of the at least one RTWT agreement of the second AP. This helps implement enhanced transmission in a multi-AP coordination scenario, and improve communication quality.

For example, the RTWT parameter that the first radio frame requests the second AP to modify includes one or more of the following: a start time of a 1^{st} RTWT (service period, SP), a minimum duration of an RTWT SP, or an interval between adjacent RTWT SPs. The start time of the 1^{st} RTWT SP may also be referred to as a future RTWT SP start time (a future RTWT SP start time).

For example, the first radio frame may include indication information #1, and the indication information #1 includes three bits that are in a one-to-one correspondence with the foregoing three parameters, to indicate the RTWT parameter that the first radio frame requests the second AP to modify. For example, a 1^{st} bit (denoted as a bit #1) included in the indication information #1 corresponds to the start time of the 1^{st} RTWT SP. If a value of the bit #1 is set to a first value (for example, 1), it indicates that the RTWT parameter that the first radio frame requests the second AP to modify includes the start time of the 1^{st} RTWT SP. If a value of the bit #1 is set to a second value (for example, 0), it indicates that the parameter that the first radio frame requests the second AP to modify does not include the start time of the 1^{st} RTWT SP.

With reference to the first aspect, in some implementations of the first aspect, the first radio frame includes first indication information, the first indication information indicates a first RTWT agreement of the second AP, and the first radio frame is used to request to modify an RTWT parameter of the first RTWT agreement.

Based on the foregoing technical solution, the first AP may request, based on requirements in different application scenarios, the second AP to modify an RTWT parameter of a specific RTWT agreement. For example, if the first AP wants to establish a new RTWT agreement, but because the first RTWT agreement established by the second AP makes a time resource that can be used by the first AP to establish the new RTWT agreement fragmented, the first AP may request the second AP to modify a parameter of the first RTWT agreement, to obtain a complete time resource for the first AP to establish a new RTWT agreement.

For example, the first indication information is an identifier of the first RTWT agreement.

For example, the identifier of the first RTWT agreement is carried in a broadcast target wake time (target wake time, TWT) identifier field of the first radio frame.

With reference to the first aspect, in some implementations of the first aspect, the first radio frame includes second indication information, the second indication information indicates a modification amount of the RTWT parameter, and the modification amount of the RTWT parameter is used for modification of the RTWT parameter of at least one RTWT agreement of the second AP. The modification amount of the RTWT parameter includes one or more of the following: a modification amount of a start time of a 1^{st} RTWT SP, a modification amount of a minimum duration of an RTWT SP, or a modification amount of an interval between adjacent RTWT SPs.

Based on the foregoing technical solution, the first AP indicates, to the second AP, the modification amount of the RTWT parameter that is requested to be modified. This helps implement enhanced multi-AP protocol transmission in different application scenarios. For example, the first AP has two neighboring APs: the second AP and a third AP. If the first AP determines that a periodicity of the first RTWT agreement of the second AP is the same as a periodicity of a second RTWT agreement of the third AP, but a start time of a 1^{st} RTWT SP included in an RTWT parameter of the first RTWT agreement is different from a start time of a 1^{st} RTWT SP included in an RTWT parameter of the second RTWT agreement, the first AP may indicate, by using the second indication information, the modification amount of the start time of the 1^{st} RTWT SP, to request the second AP to modify the start time of the 1^{st} RTWT SP included in the RTWT parameter of the first RTWT agreement, so that the start time of the RTWT SP corresponding to the first RTWT agreement is the same as the start time of the RTWT SP corresponding to the second RTWT agreement.

With reference to the first aspect, in some implementations of the first aspect, the modification amount of the RTWT parameter includes the modification amount of the start time of the 1^{st} RTWT SP, and the modification amount of the start time of the 1^{st} RTWT SP indicates an amount by which a first start time is advanced; or indicates an amount by which a first start time is delayed. The first start time is a start time of a 1^{st} RTWT SP included in an RTWT parameter of a first RTWT agreement of the second AP, and the at least one RTWT agreement includes the first RTWT agreement.

For example, the modification amount of the start time of the 1^{st} RTWT SP satisfies any one of the following conditions: a duration between a second start time obtained by modifying the first start time based on the modification amount of the start time of the 1^{st} RTWT SP and a third start time does not exceed a first duration threshold; or a duration between a second start time obtained by modifying the first start time based on the modification amount of the start time of the 1^{st} RTWT SP and a third start time exceeds a second duration threshold. The third start time is a start time of a 1^{st} RTWT SP included in an RTWT parameter of a second RTWT agreement of a third AP.

For example, the modification amount of the start time of the 1^{st} RTWT SP may be any one of the following: a first duration; or a second duration, where an absolute value of a difference between the second duration and the first duration does not exceed the first duration threshold. The first duration is a duration between the first start time and the third start time.

Based on the foregoing technical solution, if the interval between the second start time and the third start time does not exceed the first duration threshold, a quantity of TXOP interruptions of the first AP and a station associated with the first AP can be reduced, thereby improving communication quality. If the interval between the second start time and the third start time exceeds the second duration threshold, it is beneficial to obtain a complete time resource used by another AP (for example, the first AP) to establish a new RTWT agreement between the first RTWT agreement and the second RTWT agreement. This helps ensure transmission of a low-latency service of the first AP, and improve communication quality.

With reference to the first aspect, in some implementations of the first aspect, the modification amount of the RTWT parameter includes the modification amount of the interval between adjacent RTWT SPs, where the modification amount of the interval between adjacent RTWT SPs indicates an amount by which a first interval is increased, or indicates an amount by which a first interval is decreased. The first interval is an interval between adjacent RTWT SPs included in the RTWT parameter of the first RTWT agreement of the second AP, and the at least one RTWT agreement includes the first RTWT agreement.

For example, the modification amount of the interval between the adjacent RTWT SPs satisfies any one of the following conditions. A second interval obtained by modifying the first interval based on the modification amount of the interval between adjacent RTWT SPs is the same as a third interval; or a second interval obtained by modifying the first interval based on the modification amount of the interval between adjacent RTWT SPs has a multiple relationship with a third interval; or a second interval obtained by modifying the first interval based on the modification amount of the interval between adjacent RTWT SPs exceeds an interval threshold. The third interval is an interval between adjacent RTWT SPs included in the RTWT parameter of the second RTWT agreement of the third AP.

For example, the modification amount of the interval between adjacent RTWT SPs may be any one of the following: a difference between the first interval and the third interval; or a difference between the first interval and the interval threshold.

Based on the foregoing technical solution, if the second interval is the same as the third interval, or the second interval has a multiple relationship with the third interval, a start time of an RTWT SP corresponding to the first RTWT agreement can be aligned with a start time of an RTWT SP corresponding to the second RTWT agreement. In this way, a quantity of TXOP interruptions of the first AP and a station associated with the first AP can be reduced, and communication quality is improved. If the second interval exceeds the interval threshold, it is beneficial to obtain a complete time resource used by another AP (for example, the first AP) to establish a new RTWT agreement between adjacent RTWT SPs corresponding to the first RTWT agreement. This helps ensure transmission of a low-latency service of the first AP, and improve communication quality.

For example, the modification amount of the RTWT parameter is carried in a TWT offset field of the first radio frame.

With reference to the first aspect, in some implementations of the first aspect, the first radio frame further includes identification information of the third AP.

For example, the identification information of the third AP is a media access control (media access control, MAC) address of the third AP or an identifier (identifier, ID) of the third AP.

Based on the foregoing technical solution, the second AP may determine, based on the identification information of the third AP, whether the second AP and the third AP interfere with each other. Further, when determining that the second AP and the third AP do not interfere with each other, the second AP modifies the RTWT parameter of the at least one RTWT agreement, thereby avoiding a decrease in communication quality caused by blindly modifying the RTWT parameter of the at least one RTWT agreement by the second AP.

With reference to the first aspect, in some implementations of the first aspect, the first radio frame includes third indication information, and the third indication information indicates a reason for requesting to modify an RTWT parameter of at least one RTWT agreement of the second AP.

For example, a reason why the first AP requests to modify the RTWT parameter of the at least one RTWT agreement of the second AP is as follows: a start time of at least one RTWT SP corresponding to the at least one RTWT agreement of the second AP is aligned with a start time of at least one RTWT SP corresponding to the second RTWT agreement. In this case, the third indication information may be the identification information of the third AP.

For example, the third indication information is carried in a reason code field of the first radio frame.

With reference to the first aspect, in some implementations of the first aspect, the second radio frame includes fourth indication information, and the fourth indication information indicates whether the second AP agrees with the request of the first AP.

With reference to the first aspect, in some implementations of the first aspect, the fourth indication information indicates that the second AP does not agree with the request of the first AP, and the fourth indication information further indicates a reason why the second AP does not agree with the request of the first AP.

According to a second aspect, a communication method is provided. The method may be performed by a communication device, or may be performed by a component (for example, a chip or a circuit) of a communication device. This is not limited. For ease of description, the following uses an example in which the method is performed by a second AP for description.

The method includes: The second AP receives a first radio frame from a first AP, where the first radio frame is used to request to modify an RTWT parameter of at least one RTWT agreement of the second AP; and the second AP sends a second radio frame to the first AP, where the second radio frame is a response frame of the first radio frame.

For beneficial effects of the second aspect and the implementations of the second aspect, refer to the descriptions of the first aspect.

With reference to the second aspect, in some implementations of the second aspect, the RTWT parameter that the first radio frame requests the second AP to modify includes one or more of the following: a start time of a 1^{st} RTWT SP, a minimum duration of an RTWT SP, or an interval between adjacent RTWT SPs.

With reference to the second aspect, in some implementations of the second aspect, the first radio frame includes first indication information, the first indication information indicates a first RTWT agreement of the second AP, and the first radio frame is used to request to modify an RTWT parameter of the first RTWT agreement.

With reference to the second aspect, in some implementations of the second aspect, the first indication information is an identifier of the first RTWT agreement.

With reference to the second aspect, in some implementations of the second aspect, the identifier of the first RTWT agreement is carried in a broadcast TWT identifier field of the first radio frame.

With reference to the second aspect, in some implementations of the second aspect, the first radio frame includes second indication information, the second indication information indicates a first modification amount of the RTWT parameter, and the first modification amount of the RTWT parameter is used for modification of the RTWT parameter of at least one RTWT agreement of the second AP. The first modification amount of the RTWT parameter includes one or more of the following: a modification amount of a start time of a 1^{st} RTWT SP, a modification amount of a minimum duration of an RTWT SP, or a modification amount of an interval between adjacent RTWT SPs.

With reference to the second aspect, in some implementations of the second aspect, the first modification amount of the RTWT parameter includes the modification amount of the start time of the 1^{st} RTWT SP, and the modification amount of the start time of the 1^{st} RTWT SP indicates an amount by which a first start time is advanced; or indicates an amount by which a first start time is delayed. The first start time is a start time of a 1^{st} RTWT SP included in an RTWT parameter of a first RTWT agreement of the second AP, and the at least one RTWT agreement includes the first RTWT agreement.

With reference to the second aspect, in some implementations of the second aspect, the modification amount of the start time of the 1^{st} RTWT SP satisfies any one of the following conditions: a duration between a second start time obtained by modifying the first start time based on the modification amount of the start time of the 1^{st} RTWT SP and a third start time does not exceed a first duration threshold; or a duration between a second start time obtained by modifying the first start time based on the modification amount of the start time of the 1^{st} RTWT SP and a third start time exceeds a second duration threshold. The third start time is a start time of a 1^{st} RTWT SP included in an RTWT parameter of a second RTWT agreement of a third AP.

With reference to the second aspect, in some implementations of the second aspect, the first modification amount of the RTWT parameter includes the modification amount of the interval between adjacent RTWT SPs, where the modification amount of the interval between adjacent RTWT SPs indicates an amount by which a first interval is increased, or indicates an amount by which a first interval is decreased. The first interval is an interval between adjacent RTWT SPs included in the RTWT parameter of the first RTWT agreement of the second AP, and the at least one RTWT agreement includes the first RTWT agreement.

With reference to the second aspect, in some implementations of the second aspect, the modification amount of the interval between the adjacent RTWT SPs satisfies any one of the following conditions. A second interval obtained by modifying the first interval based on the modification amount of the interval between adjacent RTWT SPs is the same as a third interval; or a second interval obtained by modifying the first interval based on the modification amount of the interval between adjacent RTWT SPs has a multiple relationship with a third interval; or a second interval obtained by modifying the first interval based on the modification amount of the interval between adjacent RTWT SPs exceeds an interval threshold. The third interval is an interval between two adjacent RTWT SPs included in the RTWT parameter of the second RTWT agreement of the third AP.

With reference to the second aspect, in some implementations of the second aspect, the first modification amount of the RTWT parameter is carried in a TWT offset field of the first radio frame.

With reference to the second aspect, in some implementations of the second aspect, the first radio frame further includes identification information of the third AP.

With reference to the second aspect, in some implementations of the second aspect, the first radio frame includes third indication information, and the third indication information indicates a reason for requesting to modify an RTWT parameter of at least one RTWT agreement of the second AP.

With reference to the second aspect, in some implementations of the second aspect, the third indication information is carried in a reason code field of the first radio frame.

With reference to the second aspect, in some implementations of the second aspect, the second radio frame includes fourth indication information, and the fourth indication information indicates whether the second AP agrees with the request of the first AP.

With reference to the second aspect, in some implementations of the second aspect, the fourth indication information indicates that the second AP does not agree with the request of the first AP, and the fourth indication information further indicates a reason why the second AP does not agree with the request of the first AP.

With reference to the second aspect, in some implementations of the second aspect, the method further includes: The second AP sends a third radio frame, where the third radio frame includes fifth indication information, and the fifth indication information indicates a modified RTWT parameter of the at least one RTWT agreement or indicates a second modification amount of the RTWT parameter. The second modification amount of the RTWT parameter is used for modification of the RTWT parameter of the at least one RTWT agreement to obtain the modified RTWT parameter of the at least one RTWT agreement.

Based on the foregoing technical solution, after modifying the RTWT parameter of the at least one RTWT agreement, the second AP may send the third radio frame, so that a station associated with the second AP and/or a neighboring AP of the second AP determine/determines a modified RTWT parameter.

With reference to the second aspect, in some implementations of the second aspect, the third radio frame further includes sixth indication information, and the sixth indication information indicates a time at which the modified RTWT parameter of the at least one RTWT agreement takes effect.

According to a third aspect, a communication method is provided. The method may be performed by a communication device, or may be performed by a component (for example, a chip or a circuit) of a communication device. This is not limited. For ease of description, the following uses an example in which the method is performed by a first AP for description.

The method includes: The first AP generates a fourth radio frame, where the fourth radio frame includes an RTWT parameter of a second RTWT agreement of a third AP and identification information of the third AP; and the first AP sends the fourth radio frame.

Based on the foregoing technical solution, the fourth radio frame sent by the first AP includes the RTWT parameter of the second RTWT agreement of the third AP and the identification information of the third AP, so that when the second AP determines, based on the identification information of the third AP, that the second AP and the third AP do not interfere with each other, the second AP modifies an RTWT parameter of at least one RTWT agreement of the second AP based on the RTWT parameter of the second RTWT agreement. This helps implement enhanced transmission in a multi-AP coordination scenario and improve communication quality.

With reference to the third aspect, in some implementations of the third aspect, the RTWT parameter of the second RTWT agreement is used by the second AP to modify the RTWT parameter of the at least one RTWT agreement of the second AP.

With reference to the third aspect, in some implementations of the third aspect, the identification information of the third AP includes a MAC address of the third AP, and the MAC address of the third AP is carried in an AP MAC address field of a TWT element included in the fourth radio frame.

With reference to the third aspect, in some implementations of the third aspect, the identification information of the third AP includes an identifier of the third AP, and the identifier of the third AP is carried in an AP identifier field of the TWT element included in the fourth radio frame, or is carried in a fifth byte of a broadcast TWT parameter set field of the TWT element, or is carried in a B3 field to a B7 field of a broadcast TWT information field of a broadcast TWT parameter set field.

With reference to the third aspect, in some implementations of the third aspect, the method further includes: The first AP sends a mapping relationship to the second AP, where the mapping relationship includes the identifier of the third AP and the MAC address of the third AP.

With reference to the third aspect, in some implementations of the third aspect, the parameter of the second RTWT agreement is carried in the TWT element included in the fourth radio frame.

According to a fourth aspect, a communication method is provided. The method may be performed by a communication device, or may be performed by a component (for example, a chip or a circuit) of a communication device. This is not limited. For ease of description, the following uses an example in which the method is performed by a second AP for description.

The method includes: The second AP receives a fourth radio frame from a first AP, where the fourth radio frame includes an RTWT parameter of a second RTWT agreement of a third AP and identification information of the third AP; and the second AP modifies an RTWT parameter of at least one RTWT agreement of the second AP based on the RTWT parameter of the second RTWT agreement.

Based on the foregoing technical solution, the fourth radio frame sent by the first AP includes the RTWT parameter of the second RTWT agreement of the third AP and the identification information of the third AP, so that when the second AP determines, based on the identification information of the third AP, that the second AP and the third AP do not interfere with each other, the second AP modifies the RTWT parameter of the at least one RTWT agreement of the second AP based on the RTWT parameter of the second RTWT agreement. This helps implement enhanced transmission in a multi-AP coordination scenario, and improve communication quality.

With reference to the fourth aspect, in some implementations of the fourth aspect, the identification information of the third AP includes a MAC address of the third AP, and the MAC address of the third AP is carried in an AP MAC address field of a TWT element included in the fourth radio frame.

With reference to the fourth aspect, in some implementations of the fourth aspect, the identification information of the third AP includes an identifier of the third AP, and the identifier of the third AP is carried in an AP identifier field of the TWT element included in the fourth radio frame, or carried in a fifth byte of a broadcast TWT parameter set field of the TWT element, or carried in a B3 field to a B7 field of a broadcast TWT information field of a broadcast TWT parameter set field.

With reference to the fourth aspect, in some implementations of the fourth aspect, the method further includes: The second AP receives a mapping relationship from the first AP, where the mapping relationship includes the identifier of the third AP and the MAC address of the third AP.

With reference to the fourth aspect, in some implementations of the fourth aspect, the parameter of the second RTWT agreement is carried in the TWT element included in the fourth radio frame.

With reference to the fourth aspect, in some implementations of the fourth aspect, the RTWT parameter of the second RTWT agreement includes a start time of a 1^{st} RTWT SP, and that the second AP modifies the RTWT parameter of the at least one RTWT agreement of the second AP based on the RTWT parameter of the second RTWT agreement includes: The second AP modifies the RTWT parameter of the at least one RTWT agreement based on the RTWT parameter of the second RTWT agreement, to obtain a modified RTWT parameter of the at least one RTWT agreement. A start time of a 1^{st} RTWT SP included in the modified RTWT parameter of the at least one RTWT agreement is the same as a third start time, and the third start time is the start time of the 1^{st} RTWT SP included in the RTWT parameter of the second RTWT agreement.

Based on the foregoing technical solution, if the start time of the 1^{st} RTWT SP included in the modified RTWT parameter of the at least one RTWT agreement is the same as the third start time, a quantity of TXOP interruptions of the first AP and a station associated with the first AP can be reduced, thereby improving communication quality.

With reference to the fourth aspect, in some implementations of the fourth aspect, the RTWT parameter of the second RTWT agreement includes an interval between adjacent RTWT SPs, and that the second AP modifies the RTWT parameter of the at least one RTWT agreement of the second AP based on the RTWT parameter of the second RTWT agreement includes: The second AP modifies the RTWT parameter of the at least one RTWT agreement based on the RTWT parameter of the second RTWT agreement, to obtain a modified RTWT parameter of the at least one RTWT agreement. An interval between adjacent RTWT SPs included in the modified RTWT parameter of the at least one RTWT agreement is the same as a third interval, and the third interval is the interval between adjacent RTWT SPs included in the RTWT parameter of the second RTWT agreement.

Based on the foregoing technical solution, if the interval between adjacent RTWT SPs included in the modified RTWT parameter of the at least one RTWT agreement is the same as the third interval, a start time of an RTWT SP corresponding to the at least one RTWT agreement can be aligned with a start time of an RTWT SP corresponding to the second RTWT agreement, so that a quantity of TXOP interruptions of the first AP and a station associated with the first AP can be reduced, and communication quality is improved.

According to a fifth aspect, a communication apparatus is provided. The communication apparatus is configured to perform the method provided in any one of the first aspect to the fourth aspect. Specifically, the communication apparatus may include units and/or modules configured to perform the method provided in any one of the first aspect or the foregoing implementations of the first aspect, or include units and/or modules configured to perform the method provided in any one of the second aspect or the foregoing implementations of the second aspect, or include units and/or modules configured to perform the method provided in any one of the third aspect or the foregoing implementations of the third aspect, or include units and/or modules, for example, processing units and/or transceiver units, configured to perform the method provided in any one of the fourth aspect or the foregoing implementations of the fourth aspect.

In an implementation, the communication apparatus is a device (for example, a first AP or a second AP). When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a first AP or a second AP). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, a communication apparatus is provided. The apparatus includes: a memory, configured to store a program, and at least one processor, configured to execute a computer program or instructions stored in the memory, to perform the method provided in any one of the first aspect or the implementations of the first aspect, or perform the method provided in any one of the second aspect or the implementations of the second aspect, or perform the method provided in any one of the third aspect or the implementations of the third aspect, or perform the method provided in any one of the fourth aspect or the implementations of the fourth aspect.

In an implementation, the communication apparatus is a device (for example, a first AP or a second AP).

In another implementation, the apparatus is a chip, a chip system, or a circuit used in a device (for example, a first AP or a second AP).

According to a seventh aspect, this application provides a processor. The processor is configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code includes instructions used to perform the method provided in any one of the first aspect or the foregoing implementations of the first aspect, or includes instructions used to perform the method provided in any one of the second aspect or the implementations of the second aspect, or includes instructions used to perform the method provided in any one of the third aspect or the implementations of the third aspect, or includes instructions used to perform the method provided in any one of the fourth aspect or the implementations of the fourth aspect.

According to a ninth aspect, a computer program product including instructions is provided. When the computer program product runs on a computer, the computer is enabled to perform the method provided in any one of the first aspect or the implementations of the first aspect, or the computer is enabled to perform the method provided in any one of the second aspect or the implementations of the second aspect, or the computer is enabled to perform the method provided in any one of the third aspect or the implementations of the third aspect, or the computer is enabled to perform the method provided in any one of the fourth aspect or the implementations of the fourth aspect.

According to a tenth aspect, a chip is provided. The chip includes a processor and a communication interface. The processor reads, through the communication interface, instructions stored in a memory, to perform the method provided in any one of the first aspect or the implementations of the first aspect, or perform the method provided in any one of the second aspect or the implementations of the second aspect, or perform the method provided in any one of the third aspect or the implementations of the third aspect, or perform the method provided in any one of the fourth aspect or the implementations of the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the first aspect or the implementations of the first aspect, or perform the method provided in any one of the second aspect or the implementations of the second aspect, or perform the method provided in any one of the third aspect or the implementations of the third aspect, or perform the method provided in any one of the fourth aspect or the implementations of the fourth aspect.

According to an eleventh aspect, a communication system is provided, including the foregoing first AP and second AP.

### BRIEF DESCRIPTION OF DRAWINGS

FIG. 1 is a diagram of an application scenario to which an embodiment of this application is applicable;
FIG. 2 is a diagram of establishing an individual TWT agreement between an AP and a STA;
FIG. 3 is a schematic flowchart of a communication method according to an embodiment of this application;
FIG. 4 is a diagram of a frame structure of a third radio frame according to an embodiment of this application;
FIG. 5 is a schematic flowchart of a communication method according to another embodiment of this application;
FIG. 6 is a diagram of a structure of a TWT element according to an embodiment of this application;
FIG. 7 is a diagram of a structure of a mapping element according to an embodiment of this application;
FIG. 7a is a diagram of a structure of a first information element according to an embodiment of this application;
FIG. 8 is a diagram of a communication apparatus according to an embodiment of this application;
FIG. 9 is a diagram of another communication apparatus according to an embodiment of this application; and
FIG. 10 is a diagram of a chip system according to an embodiment of this application.

### DESCRIPTION OF EMBODIMENTS

The following describes the technical solution of embodiments in this application with reference to accompanying drawings.

Embodiments of this application may be applied to a wireless local area network (wireless local area network, WLAN). Currently, a standard used by the WLAN is the Institute of Electrical and Electronics Engineering (institute of electrical and electronics engineer, IEEE) 802.11 series. The WLAN may include a plurality of basic service sets (basic service set, BSS). Network nodes in the BSS are a station (station, STA) and an access point (access point, AP). Each BSS may include one AP and a plurality of STAs associated with the AP.

An AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a device that supports the 802.11ax standard. Further, optionally, the AP may be a device that supports a plurality of WLAN standards such as 802.11ac, 802.11n, 802.11g, 802.11b, 802.11a, and a later version.

The STA in embodiments of this application may be a wireless communication chip, a wireless sensor, or a wireless communication terminal, for example, may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11ax standard. Further, optionally, the STA may support a plurality of WLAN standards such as 802.11ac, 802.11n, 802.11g, 802.11b, 802.11a, and a later version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main storage). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by a STA or an AP, or a function module that is in the STA or the AP and that can invoke a program and execute the program.

In addition, various aspects or features of this application may be implemented as methods, apparatuses, or products using standard programming and/or engineering techniques. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. A term "machine-readable media" may include, but is not limited to, wireless channels and various other media capable of storing, containing, and/or carrying instructions and/or data.

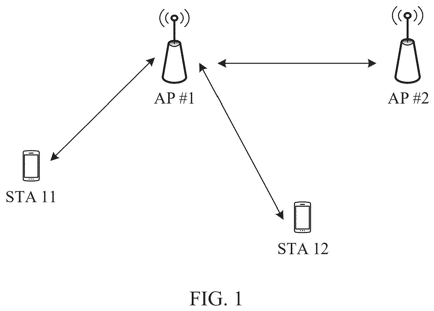

FIG. 1 is a diagram of a network architecture of a wireless local area network to which an embodiment of this application is applicable. As shown in FIG. 1, one AP may be associated with one or more STAs, that is, one AP may communicate with one or more STAs. As shown in FIG. 1, the network architecture of the wireless local area network may further include a plurality of APs, and different APs may also communicate with each other. For example, as shown in FIG. 1, the figure shows an AP #1, an AP #2, and a STA 11 and a STA 12 associated with the AP #1. Data transmission may be performed between the AP #1 and the STA 11 or the STA 12, data transmission may be performed between the STA 11 and the STA 12, and the AP #1 and the AP #2 may also communicate with each other.

It should be understood that FIG. 1 is merely an example, and the network architecture of the wireless local area network to which this application is applicable should not be limited. For example, the network architecture may further include more APs, and each AP may be associated with more STAs. This is not limited in embodiments of this application.

For ease of understanding embodiments of this application, the following briefly describes several terms in this application.

### 1. Target wake time (target wake time, TWT)

A TWT is a technology defined in Wi-Fi 6 for power saving. A core idea of the TWT is to set some periodic time periods, so that some devices need to remain active only in these time periods (referred to as TWT service periods (TWT service periods, TWT SPs)), and sleep outside the TWT SP, to achieve power saving.

The TWT is classified into an individual TWT (individual TWT) and a broadcast TWT (broadcast TWT). In the individual TWT, each STA may independently establish a TWT agreement with an AP. Therefore, each STA may have its own active time period and sleep time period. In the broadcast TWT, the AP may establish a common TWT agreement for a group of STAs, and a plurality of STAs work in a same active time period and sleep in a same time period.

### 2. Individual TWT

The individual TWT means that a TWT requesting station (TWT requesting STA) sends a TWT requesting message to a TWT responding station (TWT responding STA), to request to set a wake-up time. After receiving the TWT requesting message, the responding station sends a TWT responding message to the requesting station. After interaction succeeds, a TWT agreement is established between the requesting station and the responding station. After the TWT agreement is reached, both the requesting station and the responding station should remain active in an agreed-upon time period, to send and receive data. Outside the agreed time period, the station may sleep, to achieve power saving. Generally, the STA sends a TWT agreement setup request to the AP. That is, the STA is the requesting STA, and the AP is the responding STA. Certainly, the AP may also initiate a TWT agreement setup request to the station. After the TWT agreement is established, an agreed-upon active time period is referred to as a TWT SP.

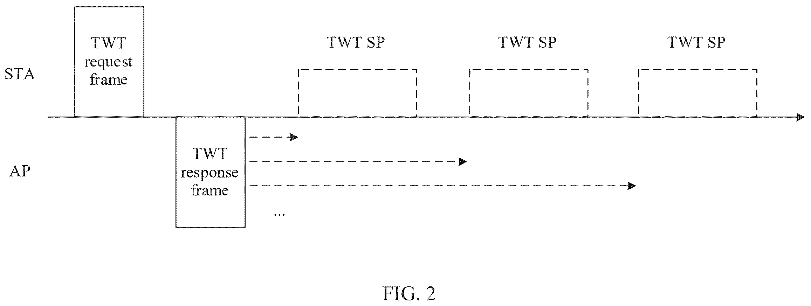

FIG. 2 is a diagram of establishing a TWT agreement between an AP and a STA. As shown in FIG. 2, the STA sends a TWT request frame to the AP to request to establish a TWT agreement, and the AP sends a TWT response frame to the STA, to establish the TWT agreement with the STA. One TWT agreement may include a plurality of TWT SPs with equal lengths that appear periodically.

### 3. Broadcast TWT

Different from the individual TWT, the broadcast TWT provides a "batch management" mechanism. The AP may establish a series of TWT SPs that periodically appear with a plurality of STAs. In the TWT SP, the plurality of STAs need to remain active, to communicate with the AP.

The AP may carry information about one or more broadcast TWTs in a beacon (beacon) frame. Each broadcast TWT is represented jointly by a broadcast TWT identifier (identifier, ID) and a media access control (media access control, MAC) address of the AP. After receiving the beacon frame, if the STA has an intention to join the broadcast TWT, the STA may send a broadcast TWT setup request message to the AP, to join the broadcast TWT. When the broadcast TWT is established, the STA needs to specify a broadcast TWT ID to join a specific broadcast TWT. After joining the broadcast TWT, the STA may wake up based on an SP indicated by a TWT parameter set, to communicate with the AP. It should be noted that, if the STA supports a broadcast TWT, but does not explicitly indicate a broadcast TWT ID of a broadcast TWT that the STA requests to join, the STA participates in a broadcast TWT whose broadcast TWT ID is 0 by default.

Similar to the individual TWT, the parameter set of the broadcast TWT also specifies a periodicity in which the TWT SP appears and a duration of each TWT SP. In addition, the broadcast TWT parameter further includes a life cycle of the broadcast TWT. The life cycle of the broadcast TWT is in a unit of beacon frame interval, and indicates a duration of the broadcast TWT.

### 4. Restricted target wake time (restricted TWT, RTWT)

RTWT is a special broadcast TWT type, and a restricted TWT SP (RTWT SP) defined by the RTWT is used to serve a low-latency service.

The AP may carry a TWT element (element) in a beacon frame to declare an RTWT service time. The AP sets a value of a broadcast TWT recommendation (broadcast TWT recommendation) field in a request type (request type) field in a TWT element to 4, to indicate the RTWT.

After the AP declares the RTWT in the beacon frame, the STA may send a request frame (for example, a TWT setup frame (TWT setup frame)) to the AP to request to join the RTWT and become a member of the RTWT, so as to send a low-latency service in the RTWT SP.

To ensure that the AP obtains a channel through contention in the RTWT SP to communicate with the STA in the low-latency service, the following rules are formulated in the standard: (1) If the STA has obtained a channel through contention and obtained a transmission opportunity (transmission opportunity, TXOP) before the RTWT SP arrives, the STA needs to terminate the TXOP before the RTWT SP arrives. (2) If the STA backs off a back-off counter to 0 through channel contention before the RTWT SP arrives, the STA needs to determine whether the STA can complete one transmission before the RTWT arrives. If the STA cannot complete the transmission, the STA cannot initiate transmission. According to the foregoing rules, the AP can successfully obtain a channel through contention when the RTWT SP starts, to perform low-latency service communication in the RTWT SP.

### 5. Multi-AP coordination scenario

With development of a wireless network and continuous popularization of a WLAN technology, WLAN devices become increasingly dense. Because APs are easy to deploy, increasingly dense APs also cause more cell interference. How to reduce inter-cell interference and improve service quality of a user through coordination between APs is a problem that needs to be considered in a next-generation Wi-Fi technology.

For the RTWT, an AP (for example, an AP 1) may broadcast RTWT information of a neighboring AP (for example, an AP 2), so that a STA associated with the AP 1 terminates a TXOP before an RTWT SP of the AP 2 arrives, to ensure communication of a low-latency service of the AP 2.

As described above, in a multi-AP coordination scenario, an AP and a non-AP station (non-AP STA) need to terminate a TXOP before an RTWT SP of a neighboring cell arrives. If there are a large quantity of neighboring cells (each neighboring cell may also have a plurality of RTWT agreements), the AP and the non-AP STA need to terminate the TXOP in advance a plurality of times, and communication quality is greatly affected.

In view of this, this application provides a communication method, to implement enhanced transmission in a multi-AP coordination scenario and improve communication quality.

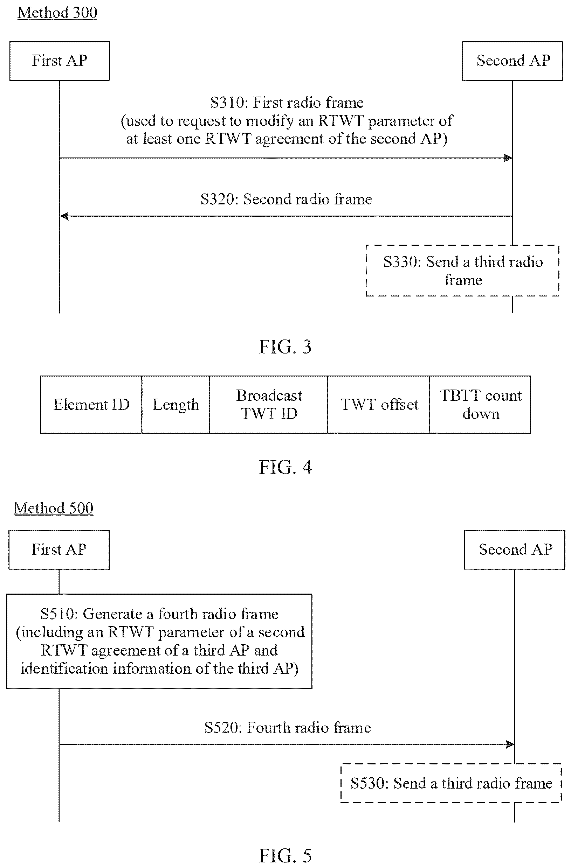

FIG. 3 is a schematic flowchart of a communication method 300 according to an embodiment of this application. The method 300 may include the following steps.

S310: A first AP sends a first radio frame to a second AP.

Correspondingly, the second AP receives the first radio frame from the first AP. The second AP is a neighboring AP of the first AP.

The first radio frame is used to request to modify an RTWT parameter of at least one RTWT agreement of the second AP. The at least one RTWT agreement of the second AP is an RTWT agreement that has been established by the second AP. The following uses a first RTWT agreement in the at least one RTWT agreement as an example to describe a manner in which the second AP establishes the RTWT agreement. The second AP may include a first TWT element in a broadcast beacon frame to declare an RTWT SP of the first RTWT agreement. The first TWT element includes an RTWT parameter of the first RTWT agreement and an ID of the first RTWT agreement. Correspondingly, after a STA associated with the second AP receives the beacon frame from the second AP, if the STA has an intention to join the first RTWT agreement, the STA may send an RTWT setup request message to the AP, to join the first RTWT agreement, where the RTWT setup request message includes the ID of the first RTWT agreement.

For example, the RTWT parameter that the first radio frame requests the second AP to modify may include one or more of the following: a start time of a 1^{st} RTWT SP, a minimum duration of an RTWT SP, or an interval between adjacent RTWT SPs. The start time of the 1^{st} RTWT SP may also be referred to as a future RTWT SP start time (a future RTWT SP start time).

The first RTWT agreement is used as an example. The start time of the 1^{st} RTWT SP included in the RTWT parameter of the first RTWT agreement is carried in a TWT field of the first TWT element, the minimum duration of the RTWT SP included in the RTWT parameter of the first RTWT agreement is carried in a nominal minimum TWT wake duration (nominal minimum TWT wake duration) field of the first TWT element, and the interval between adjacent RTWT SPs included in the RTWT parameter of the first RTWT agreement is carried in a TWT wake interval mantissa (TWT wake interval mantissa) field and a TWT wake interval exponent (TWT wake interval exponent) field of the first TWT element. The minimum duration of the RTWT SP included in the RTWT parameter of the first RTWT agreement is a minimum duration of each of a plurality of RTWT SPs corresponding to the first RTWT agreement. In other words, an actual duration of the RTWT SP corresponding to the first RTWT agreement may be greater than or equal to the minimum duration of the RTWT SP included in the RTWT parameter of the first RTWT agreement.

It should be understood that the first radio frame may be used to request the second AP to translate the entire RTWT SP corresponding to the at least one RTWT agreement by a period of time, including delaying the entire RTWT SP backward by a period of time or advancing the entire RTWT SP forward by a period of time. That the first radio frame requests the second AP to translate the entire RTWT SP corresponding to the at least one RTWT agreement by a period of time is implemented by requesting the second AP to modify the start time of the 1^{st} RTWT SP included in the RTWT parameter of the at least one RTWT agreement.

For example, the first radio frame may include indication information #1, and the indication information #1 includes three bits that are in a one-to-one correspondence with the foregoing three parameters, to indicate the RTWT parameter that the first radio frame requests the second AP to modify. For example, a 1^{st} bit (denoted as a bit #1) included in the indication information #1 corresponds to the start time of the 1^{st} RTWT SP. If a value of the bit #1 is set to a first value (for example, 1), it indicates that the RTWT parameter that the first radio frame requests the second AP to modify includes the start time of the 1^{st} RTWT SP. If a value of the bit #1 is set to a second value (for example, 0), it indicates that the parameter that the first radio frame requests the second AP to modify does not include the start time of the 1^{st} RTWT SP. The first value may be 0, and the second value may be 1. This is not limited in embodiments of this application.

In a possible implementation, the first radio frame includes first indication information, and the first indication information indicates the first RTWT agreement of the second AP. It should be understood that, when the first radio frame includes the first indication information, the first radio frame is used to request to modify the RTWT parameter of the first RTWT agreement of the second AP.

The first indication information may be the ID of the first RTWT agreement. Alternatively, the first indication information may be a parameter included in the RTWT parameter of the first RTWT agreement, and the parameter is different from a parameter included in an RTWT parameter of another RTWT agreement of the second AP. For example, the first indication information is the start time (denoted as a first start time) of the 1^{st} RTWT SP included in the RTWT parameter of the first RTWT agreement, and the first start time is different from a start time of a 1^{st} RTWT SP included in the RTWT parameter of the another RTWT agreement of the second AP. Alternatively, the first indication information may be identification information of a low-latency service corresponding to the first RTWT agreement. For example, the ID of the first RTWT agreement is carried in a broadcast TWT ID (broadcast TWT ID) field included in the first radio frame.

The following describes a manner in which the first AP determines the first RTWT agreement.

For example, if the first AP determines that an RTWT parameter of an RTWT agreement (for example, an RTWT agreement #1) of the second AP is different from an RTWT parameter of a second RTWT agreement of a third AP, the first AP may determine the RTWT agreement #1 as the first RTWT agreement. The third AP is a neighboring AP of the first AP. For example, if the first AP determines that a start time of a 1^{st} RTWT SP included in the RTWT parameter of the RTWT agreement #1 is different from a start time of a 1^{st} RTWT SP included in the RTWT parameter of the second RTWT agreement, the first AP may determine the RTWT agreement #1 as the first RTWT agreement. For another example, if the first AP determines that an interval between adjacent RTWT SPs that is included in the RTWT parameter of the RTWT agreement #1 is different from an interval between adjacent RTWT SPs included in the RTWT parameter of the second RTWT agreement, the first AP may determine the RTWT agreement #1 as the first RTWT agreement.

For example, if the first AP determines that an RTWT parameter of an RTWT agreement (for example, the RTWT agreement #1) of the second AP is most similar to the RTWT parameter of the second RTWT agreement of the third AP, the first AP may determine the RTWT agreement #1 as the first RTWT agreement. For example, if the first AP determines that the start time of the 1^{st} RTWT SP included in the RTWT parameter of the RTWT agreement #1 is different from the start time of the 1^{st} RTWT SP included in the RTWT parameter of the second RTWT agreement, but another parameter included in the RTWT parameter of the RTWT agreement #1 is the same as another parameter included in the RTWT parameter of the second RTWT agreement, the first AP may determine the RTWT agreement #1 as the first RTWT agreement.

For example, if the first AP determines one or more RTWT agreements that have been established by the second AP, and a time resource that can be used to establish the RTWT agreement becomes fragmented, or a remaining time resource is insufficient to establish a new RTWT agreement, the first AP may determine, as the first RTWT agreement, at least one of the one or more RTWT agreements established by the second AP.

For example, if the first AP determines an RTWT agreement (for example, the RTWT agreement #1) that has been established by the second AP and the second RTWT agreement that has been established by the third AP, and a time resource that can be used to establish the RTWT agreement becomes fragmented, or a remaining time resource is insufficient to establish a new RTWT agreement, the first AP may determine the RTWT agreement #1 as the first RTWT agreement.

In a possible implementation, the first radio frame includes second indication information, the second indication information indicates a first modification amount of the RTWT parameter, and the first modification amount of the RTWT parameter is used for modification of the RTWT parameter of the at least one RTWT agreement of the second AP.

For example, the first modification amount of the RTWT parameter includes one or more of the following: a modification amount of a start time of a 1^{st} RTWT SP, a modification amount of a minimum duration of an RTWT SP, or a modification amount of an interval between adjacent RTWT SPs. It should be understood that, when the first radio frame includes the second indication information, the first radio frame is used to request to modify the RTWT parameter of the at least one RTWT agreement of the second AP based on the first modification amount of the RTWT parameter, or the RTWT parameter that the first radio frame requests the second AP to modify includes a parameter corresponding to the first modification amount of the RTWT parameter. For example, if the first modification amount of the RTWT parameter includes the modification amount of the start time of the 1^{st} RTWT SP, the RTWT parameter that the first radio frame requests the second AP to modify includes the start time of the 1^{st} RTWT SP. If the first modification amount of the RTWT parameter includes the modification amount of the minimum duration of the RTWT SP, the RTWT parameter that the first radio frame requests the second AP to modify includes the minimum duration of the RTWT SP. If the first modification amount of the RTWT parameter includes the modification amount of the interval between adjacent RTWT SPs, the RTWT parameter that the first radio frame requests the second AP to modify includes the interval between adjacent RTWT SPs.

For example, the first modification amount of the RTWT parameter is carried in a TWT offset (TWT offset) field of the first radio frame.

For example, the first modification amount of the RTWT parameter indicated by the second indication information is a relative value. In other words, the first modification amount of the RTWT parameter indicates an amount by which the RTWT parameter of the at least one RTWT agreement of the second AP is modified (for example, increased or decreased).

For example, the modification amount of the start time of the 1^{st} RTWT SP included in the first modification amount of the RTWT parameter may indicate an amount by which the first start time is advanced, or indicate an amount by which the first start time is delayed. The first start time is a start time of the 1^{st} RTWT SP included in the RTWT parameter of the first RTWT agreement.

The modification amount of the start time of the 1^{st} RTWT SP may also be referred to as time translation information indicating a duration of translation (forward translation or backward translation) of the first start time. In other words, that the first modification amount of the RTWT parameter that is indicated by the second indication information includes the modification amount of the start time of the 1^{st} RTWT SP is equivalent to that the first radio frame is used to request the second AP to translate the entire RTWT SP corresponding to the at least one RTWT agreement by a period of time, for example, delay the entire RTWT SP by a period of time, or advance the entire RTWT SP by a period of time.

Optionally, if the modification amount of the start time of the 1^{st} RTWT SP included in the first modification amount of the RTWT parameter is a relative value, the first radio frame may further include indication information #3. The indication information #3 indicates that the modification amount of the start time of the 1^{st} RTWT SP indicates an amount by which the first start time is advanced (or translated forward), or indicates that the modification amount of the start time of the 1^{st} RTWT SP indicates an amount by which the first start time is delayed (or translated backward).

For another example, the modification amount of the interval between adjacent RTWT SPs included in the first modification amount of the RTWT parameter may indicate an amount by which a first interval is increased, or indicate an amount by which the first interval is decreased. The first interval is an interval between adjacent RTWT SPs included in the RTWT parameter of the first RTWT agreement of the first AP.

Optionally, if the modification amount of the interval between adjacent RTWT SPs included in the first modification amount of the RTWT parameter is a relative value, the first radio frame may further include indication information #4. The indication information #4 indicates that the modification amount of the interval between adjacent RTWT SPs indicates an amount by which the first interval is increased, or indicates that the modification amount of the interval between adjacent RTWT SPs indicates an amount by which the first interval is decreased.

For example, the first modification amount of the RTWT parameter indicated by the second indication information is an absolute value. In other words, the first modification amount of the RTWT parameter indicates a value obtained after the RTWT parameter of the at least one RTWT agreement of the second AP is modified.

Optionally, a modification amount of the start time of the 1^{st} RTWT SP satisfies any one of the following conditions: a duration between a second start time obtained by modifying the first start time based on the modification amount of the start time of the 1^{st} RTWT SP and a third start time does not exceed a first duration threshold; or a duration between a second start time obtained by modifying the first start time based on the modification amount of the start time of the 1^{st} RTWT SP and a third start time exceeds a second duration threshold. The third start time is a start time of the 1^{st} RTWT SP included in the RTWT parameter of the second RTWT agreement of the third AP. The first duration threshold does not exceed a shortest duration required by an AP or a STA to contend for a channel. For example, the first duration threshold may be a short inter-frame space (short inter-frame space, SIFS), a point coordination function inter-frame space (point coordination function inter-frame space, PIFS), 4 microseconds (µs), or 8 µs. The second duration threshold is not less than a sum of a shortest duration required by the AP or the STA to perform one low-latency service transmission and a first minimum duration, or the second duration threshold is not less than a sum of a shortest duration required by the AP or the STA to perform one low-latency service transmission and a second minimum duration. The first minimum duration is a minimum duration of an RTWT SP included in the RTWT parameter of the first RTWT agreement of the second AP, and the second minimum duration is e minimum duration of an RTWT SP included in the RTWT parameter of the second RTWT agreement of the third AP.

Optionally, the first duration threshold may be 0 µs. In other words, the second start time obtained by modifying the first start time based on the modification amount of the start time of the 1^{st} RTWT SP is the same as the third start time.

For example, if the modification amount of the start time of the 1^{st} RTWT SP is a relative value, the modification amount of the start time of the 1^{st} RTWT SP may be any one of the following: a first duration; or a second duration, where an absolute value of a difference between the second duration and the first duration does not exceed the first duration threshold. The first duration is a duration between the first start time and the third start time.

For another example, if the modification amount of the start time of the 1^{st} RTWT SP is an absolute value, the modification amount of the start time of the 1^{st} RTWT SP may be any one of the following: the third start time; or a start time #1, where a duration between the start time #1 and the third start time does not exceed the first duration threshold; or a start time #2, where a duration between the start time #2 and the third start time exceeds the second duration threshold.

Optionally, the modification amount of the interval between adjacent RTWT SPs satisfies any one of the following conditions: A second interval obtained by modifying the first interval based on the modification amount of the interval between adjacent RTWT SPs is the same as a third interval; or a second interval obtained by modifying the first interval based on the modification amount of the interval between adjacent RTWT SPs has a multiple relationship with a third interval; or a second interval obtained by modifying the first interval based on the modification amount of the interval between adjacent RTWT SPs exceeds an interval threshold. The third interval is an interval between adjacent RTWT SPs included in the RTWT parameter of the second RTWT agreement of the third AP. A duration corresponding to the interval threshold is not less than the sum of the shortest duration required by the AP or the STA to perform one low-latency service transmission and the first minimum duration.

For example, if the modification amount of the interval between adjacent RTWT SPs is a relative value, the modification amount of the interval between adjacent RTWT SPs may be any one of the following: a difference between the first interval and the third interval, or a difference between the first interval and the interval threshold.

For another example, if the modification amount of the interval between adjacent RTWT SPs is an absolute value, the modification amount of the interval between adjacent RTWT SPs may be any one of the following: the third interval; or an interval #1, where the interval #1 is a multiple of the third interval; or an interval #2, where the third interval is a multiple of the interval #2; or an interval #4, where the interval #4 is not less than the interval threshold.

Optionally, if the first modification amount of the RTWT parameter is determined based on the RTWT parameter of the second RTWT agreement of the third AP, the first radio frame further includes a MAC address of the third AP. For example, if the first modification amount of the RTWT parameter includes the modification amount of the start time of the 1^{st} RTWT SP, and the modification amount of the start time of the 1^{st} RTWT SP is the first duration, the first radio frame further includes identification information of the third AP. The identification information of the third AP includes the MAC address of the third AP or an ID of the third AP. For example, the MAC address of the third AP is carried in overlapping AP MAC address (overlapping AP MAC address) fields of the first radio frame.

If the identification information of the third AP includes the ID of the third AP, the method 300 may further include: The first AP sends a mapping relationship to the second AP, where the mapping relationship is a mapping relationship between the ID of the third AP and the MAC address of the third AP. In other words, the mapping relationship may include the MAC address of the third AP and the ID of the third AP.

The following describes two possible scenarios in which the first AP indicates the first modification amount of the RTWT parameter by using the second indication information.

In a possible scenario, it is assumed that the first AP has two neighboring APs: the second AP and the third AP. If the first AP determines that a periodicity of the first RTWT agreement of the second AP is the same as a periodicity of the second RTWT agreement of the third AP, in other words, the first interval is the same as the third interval, but the first start time is different from the third start time, or, if the duration of the interval between the first start time and the third start time exceeds the first duration threshold, the first modification amount that is of the RTWT parameter and that is indicated by the second indication information may include the modification amount of the start time of the 1^{st} RTWT SP, to request the second AP to modify the first start time. Therefore, the first start time is the same as the third start time, or the duration between the first start time and the third start time does not exceed the first duration threshold.

In another possible scenario, if the first AP wants to establish a new RTWT agreement, but because a neighboring AP of the first AP has established several RTWT agreements, time resources that can be used by the first AP to establish the new RTWT agreement become fragmented. In this case, the first modification amount that is of the RTWT parameter and that is indicated by the second indication information may include the modification amount of the start time of the 1^{st} RTWT SP, to request the second AP to modify the start time of the 1^{st} RTWT SP included in the RTWT parameter of the at least one RTWT agreement. In this way, a complete time resource used by the first AP to establish a new RTWT agreement is obtained.

It should be understood that the foregoing describes, by using examples, the two application scenarios to which embodiments of this application are applicable. Embodiments of this application is further applicable to another application scenario different from the foregoing application scenarios. This is not limited in this application.

In a possible implementation, the first radio frame includes third indication information, and the third indication information indicates a reason for requesting to modify an RTWT parameter of at least one RTWT agreement of the second AP.

For example, a reason why the first AP requests to modify the RTWT parameter of the at least one RTWT agreement of the second AP is as follows: A start time of at least one RTWT SP corresponding to the at least one RTWT agreement of the second AP is aligned with a start time of at least one RTWT SP corresponding to the second RTWT agreement; or a duration between the start time of the at least one RTWT SP corresponding to the at least one RTWT agreement of the second AP and the start time of the at least one RTWT SP corresponding to the second RTWT agreement does not exceed the first duration threshold. In this case, the third indication information may be the identification information of the third AP, or the identification information of the third AP and a predefined reason value #1. For example, the predefined reason value #1 is "1".

For example, a reason why the first AP requests to modify the RTWT parameter of the at least one RTWT agreement of the second AP is as follows: a duration between the start time of the at least one RTWT SP corresponding to the at least one RTWT agreement of the second AP and a start time of any RTWT SP corresponding to the second RTWT agreement exceeds the second duration threshold; or an interval between at least two adjacent RTWT SPs corresponding to the at least one RTWT agreement of the second AP exceeds the interval threshold. In this case, the third indication information may be a predefined reason value #2, for example, the predefined reason value #2 is "2".

For example, a reason for requesting to modify the RTWT parameter of the at least one RTWT agreement of the second AP is carried in a reason code (reason code) field of the first radio frame.

The following describes a frame format of the first radio frame.

In a possible implementation, a frame type of the first radio frame may be an action frame (action frame), and a frame body part of the first radio frame may include one or more fields shown in Table 1.

**Table 1 Frame format of the first radio frame**

| Order (order) | Meaning (meaning) |
|---|---|
| 1 | Category (category) |
| 2 | Ultra high reliability (ultra high reliability, UHR) action (UHR action) |
| 3 | Broadcast TWT ID (broadcast TWT ID) |
| 4 | TWT offset (TWT offset) |
| 5 | Overlapping AP MAC address (overlapping AP MAC address) |
| 6 | Reason code |

A value of the category field is a third value (for example, the third value is "1"), indicating UHR, that is, indicating that the first radio frame is a UHR action frame. A value of the UHR action field is a fourth value (for example, the fourth value is "2"), indicating that the UHR action frame is the first radio frame. The broadcast TWT ID is used to carry first indication information, for example, an ID used to carry a first RTWT agreement. The TWT offset is used to carry second indication information. In other words, the TWT offset is used to carry a first modification amount of an RTWT parameter, for example, is used to carry a duration in which a first AP requests a second AP to translate a start time of a 1^{st} RTWT SP included in an RTWT parameter of at least one RTWT agreement. The overlapping AP MAC address is used to carry identification information of a third AP. The reason code is used to carry the third indication information, or is used to carry a reason for requesting to modify the RTWT parameter of the at least one RTWT agreement of the second AP. For example, a value of the reason code is set to a predefined reason value #1. It is indicated that an objective of the first AP requesting the second AP to modify the RTWT parameter of the at least one RTWT agreement is to align with a start time of a 1^{st} RTWT SP included in an RTWT parameter of an RTWT agreement (for example, the second RTWT agreement) of the third AP.

It should be understood that the first radio frame may include one or more fields shown in Table 1, or the first radio frame may further include another field not shown in Table 1. This is not limited in embodiments of this application.

For example, the first radio frame may be referred to as an RTWT modification request frame (RTWT modification request frame), or the first radio frame may have another name. This is not limited in embodiments of this application.

S320: The second AP sends a second radio frame to the first AP.

Correspondingly, the first AP receives the second radio frame from the second AP. The second radio frame is a response frame of the first radio frame.

After receiving the first radio frame from the first AP, the second AP may determine whether to accept a request of the first AP, and return the second radio frame to the first AP.

For example, the second radio frame may include fourth indication information, and the fourth indication information indicates whether the second AP agrees with the request of the first AP.

Optionally, when the fourth indication information indicates that the second AP does not agree with the request of the first AP, the fourth indication information further indicates a reason why the second AP does not agree with the request of the first AP.

Optionally, when the fourth indication information indicates that the second AP does not agree with the request of the first AP, the second radio frame may further include indication information #2, and the indication information #2 indicates a reason why the second AP does not agree with the request of the first AP.

The following describes a manner in which the second AP determines whether to accept the request of the first AP.

In a possible implementation, the second AP accepts the request of the first AP by default, or the second AP does not accept the request of the first AP by default.

In a possible implementation, when the first radio frame includes the first indication information, the second AP may determine, based on a priority of a low-latency service corresponding to the first RTWT agreement, whether to accept the request of the first AP. For example, if the priority of the low-latency service corresponding to the first RTWT agreement is high, the second AP may determine not to accept the request of the first AP. If the priority of the low-latency service corresponding to the first RTWT agreement is low, the second AP may determine to accept the request of the first AP.

In this implementation, if the second AP does not accept the request of the first AP, a reason indicated by the fourth indication information or the indication information #2 may be that the priority of the low-latency service corresponding to the first RTWT agreement is high.

In a possible implementation, when the first radio frame includes the second indication information, the second AP may determine, based on whether a first modification amount of an RTWT parameter exceeds an allowable modification amount threshold, whether to accept the request of the first AP. For example, if the modification amount of the RTWT parameter includes a modification amount of a start time of a 1^{st} RTWT SP, and the modification amount of the start time of the 1^{st} RTWT SP exceeds an allowable modification amount threshold of the start time of the 1^{st} RTWT SP, the second AP may determine not to accept the request of the first AP. For another example, if the first modification amount of the RTWT parameter includes a modification amount of an interval between adjacent RTWT SPs, and the modification amount of the interval between adjacent RTWT SPs does not exceed a modification amount threshold of the interval between adjacent RTWT SPs, the second AP may determine to accept the request of the first AP.

In this implementation, if the second AP does not accept the request of the first AP, a reason indicated by the fourth indication information or the indication information #2 may be that the first modification amount of the RTWT parameter requested by the first AP exceeds the allowable modification amount threshold.

In a possible implementation, if the first radio frame includes the identification information of the third AP, the second AP may determine, based on the identification information of the third AP, whether to accept the request of the first AP. For example, if the second AP determines, based on the identification information of the third AP, that the second AP and the third AP do not interfere with each other, the second AP may determine to accept the request of the first AP. If the second AP determines, based on the identification information of the third AP, that the second AP and the third AP interfere with each other, the second AP may determine not to accept the request of the first AP. If the second AP can obtain, through listening, a beacon frame sent by the third AP, the second AP determines that the second AP and the third AP interfere with each other. If the second AP obtains, through wireless listening, a beacon frame sent by the third AP, the second AP determines that the second AP and the third AP do not interfere with each other.

In this implementation, if the second AP does not accept the request of the first AP, a reason indicated by the fourth indication information or the indication information #2 may be that the second AP is interfered with by the third AP, or the third AP is a neighboring AP of the second AP.

The following describes a frame format of the second radio frame.

In a possible implementation, a frame type of the second radio frame may be an action frame, and a frame body part of the second radio frame may include one or more fields shown in Table 2.

**Table 2 Frame format of the second radio frame**

| Order | Meaning |
|---|---|
| 1 | Category |
| 2 | UHR action |
| 3 | Status code (status code) |

A value of the category field is a third value (for example, the third value is "1"), indicating UHR, that is, indicating that the second radio frame is a UHR action frame. A value of the UHR action field is a fifth value (for example, the fifth value is "3"), indicating that the UHR action frame is the second radio frame. The status code is used to carry the fourth indication information, or is used to carry the fourth indication information and the indication information #2. In other words, the status code indicates whether the second AP agrees with the request of the first AP, and indicates a reason why the second AP does not agree with the request of the first AP.

It should be understood that the second radio frame may include one or more fields shown in Table 2, or the second radio frame may further include another field not shown in Table 2. This is not limited in embodiments of this application.

For example, the second radio frame may be referred to as an RTWT modification response frame (RTWT modification response frame), or the second radio frame may have another name. This is not limited in embodiments of this application.

It should be noted that, in S310 and S320, frame exchange between the first AP and the second AP may be performed by the first AP and the second AP, or may be performed by the first AP and a co-located station in the second AP, or may be performed by the second AP and a co-located station in the first AP.

If the second AP agrees with the request of the first AP, the second AP may modify an RTWT parameter of the at least one RTWT agreement of the second AP based on the request of the first AP.

The following describes a manner in which the second AP modifies the RTWT parameter based on the request of the first AP.

In a possible implementation, the second AP may modify the RTWT parameter of the at least one RTWT agreement in a default manner. For example, the second AP may modify, in a default manner, an RTWT parameter of an RTWT agreement corresponding to a low-latency service whose priority is lower than a priority threshold. For another example, a modification amount by which the second AP modifies the RTWT parameter of the at least one RTWT agreement in a default manner does not exceed an allowable modification amount threshold.

In a possible implementation, if the first radio frame includes second indication information, the second AP may modify the RTWT parameter of the at least one RTWT agreement based on a first modification amount of the RTWT parameter indicated by the second indication information. For example, if the first modification amount of the RTWT parameter includes a modification amount of a start time of a 1^{st} RTWT SP, the second AP may translate, based on the modification amount of the start time of the 1^{st} RTWT SP, a start time of a 1^{st} RTWT SP included in the RTWT parameter of the at least one RTWT agreement.

After the second AP modifies the RTWT parameter of the at least one RTWT agreement, the method 300 further includes S330: The second AP sends a third radio frame.

The third radio frame includes fifth indication information. The fifth indication information indicates a modified RTWT parameter of the at least one RTWT agreement of the second AP, or indicates a second modification amount of the RTWT parameter. The second modification amount of the RTWT parameter is used for modification of the RTWT parameter of the at least one RTWT agreement to obtain the modified RTWT parameter of the at least one RTWT agreement. For example, if the second AP modifies a start time of a 1^{st} RTWT SP included in the RTWT parameter of the at least one RTWT agreement, the second modification amount of the RTWT parameter may include a modification amount of the start time of the RTWT SP.

Optionally, the third radio frame further includes an ID of the at least one RTWT agreement.

Optionally, the third radio frame further includes sixth indication information. The sixth indication information indicates a time at which the modified RTWT parameter of the at least one RTWT agreement takes effect. For example, the sixth indication information may be a quantity N of beacon frame periodicities, to indicate that the modified RTWT parameter of at least one RTWT agreement takes effect after N beacon periodicities, where N is a positive integer.

It should be understood that the second AP sends the third radio frame in a broadcast manner, so that a station associated with the second AP and/or a neighboring AP of the second AP can listen to the third radio frame, determine the modified RTWT parameter of the at least one agreement of the second AP based on the fifth indication information included in the third radio frame.

The following describes a frame format of the third radio frame.

In a possible implementation, the third radio frame may include at least one information element, and the at least one information element is in a one-to-one correspondence with at least one RTWT agreement. A first information element in the at least one information element is used as an example to describe a structure of the at least one information element included in the third radio frame. The first information element corresponds to a first RTWT agreement in the at least one RTWT agreement. As shown in FIG. 4, the first information element may include one or more of the following fields: an element identifier (element ID) field, indicating an ID of an element; a length (length) field, indicating a length of an element; a broadcast TWT ID field, indicating an ID of a first RTWT agreement corresponding to an element; a TWT offset field, indicating a modified RTWT parameter of the first RTWT agreement, or indicating a second modification amount of the RTWT parameter; and a target beacon transmission time (target beacon transmission time, TBTT) count down (count down TBTT) field, indicating a time at which the modified RTWT parameter of the first RTWT agreement takes effect.

In this embodiment of this application, the first AP may send the first radio frame to a neighboring AP (for example, the second AP), to request the second AP to modify the RTWT parameter of the at least one RTWT agreement of the second AP. This helps implement enhanced transmission in a multi-AP coordination scenario, and improve communication quality.

For example, if a periodicity of the first RTWT agreement of the second AP is the same as a periodicity of an RTWT agreement of a third AP, the second AP modifies, based on a request of the first radio frame, a start time of a 1^{st} RTWT SP included in the RTWT parameter of the first RTWT agreement, so that after a start time of an RTWT SP corresponding to the first RTWT agreement is aligned with a start time of an RTWT SP corresponding to a second RTWT agreement, a quantity of TXOP interruptions of the first AP and a station associated with the first AP can be reduced, thereby improving communication quality.

For another example, the second AP modifies, based on a request of the first radio frame, a start time of a 1^{st} RTWT SP included in the RTWT parameter of the first RTWT agreement, to obtain a complete time resource used by the first AP to establish a new RTWT agreement. This helps ensure transmission of a low-latency service of the first AP, and improve communication quality.

FIG. 5 is a schematic flowchart of a communication method 500 according to an embodiment of this application. The method 500 may include the following steps.

S510: A first AP generates a fourth radio frame.

The fourth radio frame includes an RTWT parameter of a second RTWT agreement of a third AP and identification information of the third AP.

The RTWT parameter of the second RTWT agreement is used by the second AP to modify a parameter of at least one RTWT agreement of the second AP. The RTWT parameter of the second RTWT agreement may include one or more of the following: a start time of a 1^{st} RTWT SP, a minimum duration of an RTWT SP, or an interval between adjacent RTWT SPs. The RTWT parameter of the second RTWT agreement may further include a parameter defined in another standard or agreement. This is not limited in embodiments of this application.

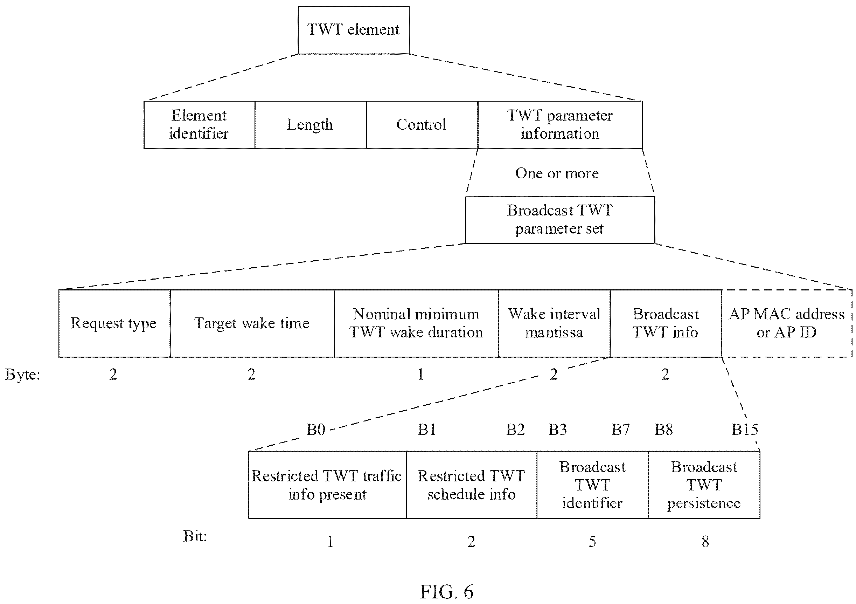

For example, the RTWT parameter of the second RTWT agreement is carried in a TWT element included in the fourth radio frame. As shown in FIG. 6, the TWT element may include one or more of the following fields: an element ID field, a length field, a control (control) field, or a TWT parameter information (TWT parameter information) field. The TWT parameter information field includes one or more broadcast TWT parameter set (broadcast TWT parameter set) fields. A broadcast TWT parameter set field corresponding to the second RTWT agreement may include one or more of the following fields: a request type (request type) field, a target wake time field, a nominal minimum TWT wake duration field indicating a minimum duration of an RTWT SP included in the RTWT parameter of the second RTWT agreement, a wake interval mantissa field indicating an interval between adjacent RTWT SPs included in the RTWT parameter of the second RTWT agreement, and a broadcast TWT information (broadcast TWT info) field. The broadcast TWT information field may include one or more of the following fields: a restricted TWT traffic information present (restricted TWT traffic info present) field, a restricted TWT schedule information (restricted TWT schedule info) field, a broadcast TWT identifier field, and a broadcast TWT persistence (broadcast TWT persistence) field. For meanings of fields included in the TWT element, refer to descriptions in an existing standard or agreement.

The identification information of the third AP is not limited in embodiments of this application.

In a possible implementation, the identification information of the third AP is a MAC address of the third AP.

The MAC address of the third AP may be carried in an AP MAC address field of the TWT element included in the first radio frame. As shown in FIG. 6, a broadcast TWT parameter set field of a TWT parameter information field of the TWT element may include the AP MAC address field, and the AP MAC address field is used to carry the MAC address of the third AP.

In a possible implementation, the identification information of the third AP is an ID of the third AP.

The ID of the third AP may be carried in an AP ID address of the TWT element included in the first radio frame. As shown in FIG. 6, the broadcast TWT parameter set field of the TWT parameter information field of the TWT element may include the AP ID field, and the AP ID field is used to carry the ID of the third AP. Alternatively, the ID of the third AP may be carried in a fifth byte of the broadcast TWT parameter set field. As shown in FIG. 6, the fifth byte of the broadcast TWT parameter set field is a nominal minimum TWT wake duration field. If the fifth byte of the broadcast TWT parameter set field is used to carry the identifier of the third AP, the broadcast TWT parameter set field does not include a nominal minimum TWT wake duration field. Alternatively, the ID of the third AP may be carried in a B3 field to a B7 field of broadcast TWT information in a broadcast parameter set field. As shown in FIG. 6, the B3 field to the B7 field of the broadcast TWT information field are broadcast TWT identifier fields. If the B3 field to the B7 field of the broadcast TWT information field are used to carry the ID of the third AP, the broadcast TWT information field does not include the broadcast TWT identifier field.

If the identification information of the third AP is the ID of the third AP, the method 500 further includes: The first AP sends a mapping relationship, where the mapping relationship is a mapping relationship between the MAC address of the third AP and the ID of the third AP, that is, the mapping relationship includes the MAC address of the third AP and the ID of the third AP.

The mapping relationship between the MAC address of the third AP and the ID of the third AP may be included in the fourth radio frame, or may be included in another radio frame different from the fourth radio frame. This is not limited in embodiments of this application.

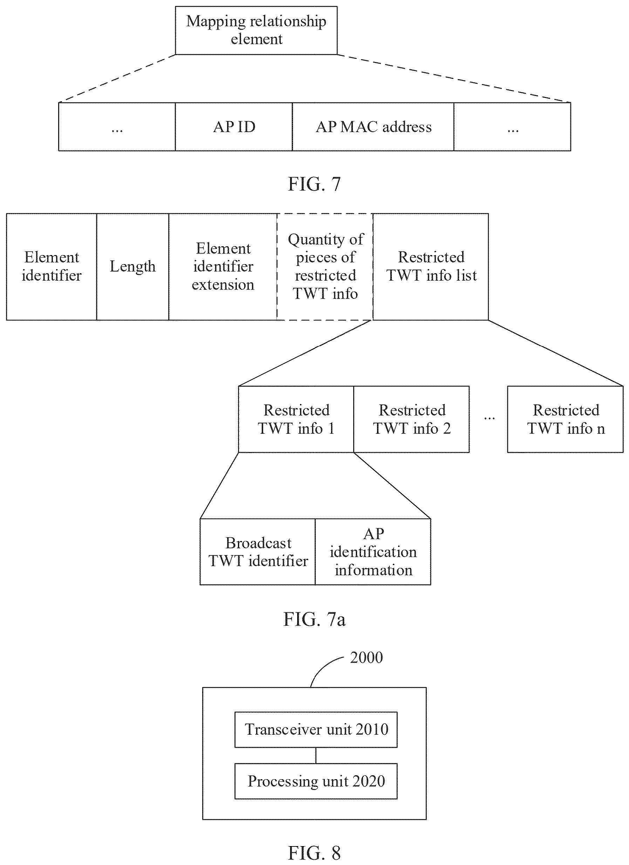

The mapping relationship between the MAC address of the third AP and the ID of the third AP may be carried in a newly defined information element. For example, the newly defined information element may be referred to as a mapping relationship element. As shown in FIG. 7, the mapping relationship element may include one or more AP ID fields and AP MAC address fields that have mapping relationships.

In another possible implementation, the identification information of the third AP is determined based on both a broadcast TWT identifier field in the TWT element and a first mapping relationship. The first mapping relationship is a broadcast mapping relationship between a TWT identifier and the identification information of the third AP. The mapping relationship may be carried in a first information element, or may be carried in the TWT element.

For example, as shown in FIG. 7a, the mapping relationship may be carried in the first information element. Specifically, the fourth radio frame includes the first information element, the first information element includes one or more broadcast TWT identifier fields and identification information fields of the third AP that have mapping relationships, and an identification information field of an AP may carry a MAC address of the AP or a BSSID of the AP, a part of a MAC address of the AP, a part of a BSSID of the AP, or a color of a BSS of the AP.

The first information element may be included in the fourth radio frame, or may be included in another radio frame different from the fourth radio frame. This is not limited in this embodiment of this application.

When receiving the fourth radio frame, a receive end determines the identification information of the third AP based on a broadcast TWT identifier field in a TWT element and the first mapping relationship. Specifically, a broadcast TWT identifier is determined from the TWT element, and the identification information of the third AP is determined from the first mapping relationship based on the determined broadcast TWT identifier. For example, the broadcast TWT identifier determined from the TWT element is a broadcast TWT ID 1, and the broadcast TWT ID 1 is found in the first mapping relationship, where an AP ID corresponding to the broadcast TWT ID 1 is an AP ID 1. In this way, it is determined that the AP ID corresponding to the broadcast TWT ID 1 is the AP ID 1.

The fourth radio frame may further carry ninth indication information, to indicate that a second RTWT agreement of the third AP is an RTWT agreement of a non-local cell. In other words, the ninth indication information indicates that an RTWT agreement sent by the first AP in the fourth frame is an RTWT agreement of another AP different from the first AP. Specifically, the ninth indication information may be carried in a broadcast TWT identifier field and a restricted TWT schedule info field in the TWT element. Further, a specific combination of values of the broadcast TWT identifier field and the restricted TWT schedule info field may indicate that the second RTWT agreement of the third AP is the RTWT agreement of the non-local cell. That is, when the value of the broadcast TWT identifier field is a specific first value, and the value of the restricted TWT schedule info field is a specific second value, it indicates that the second RTWT agreement of the third AP is the RTWT agreement of the non-local cell. For example, when the value of the broadcast TWT identifier field is 31 and the value of the restricted TWT schedule info field is 2, it indicates that the second RTWT agreement of the third AP is the RTWT agreement of the non-local cell.

The fourth radio frame is not limited in this embodiment of this application. The fourth radio frame may be a beacon frame, or the fourth radio frame may be a probe response frame (probe response frame), or may be another type of frame. It should be understood that if the fourth radio frame is a probe response frame, before S510, the method 500 further includes: The first AP receives a probe request frame (probe request frame) from a first station.

S520: The first AP sends the fourth radio frame.

For example, the first AP may send the fourth radio frame in a broadcast manner.

It may be understood that if the second AP is a neighboring AP of the first AP, when the first AP sends the fourth radio frame in a broadcast manner, the second AP may receive the fourth radio frame from the first AP.

After receiving the fourth radio frame, the second AP may obtain the RTWT parameter of the second RTWT agreement of the third AP and the identification information of the third AP from the fourth radio frame. Further, the second AP may determine, based on the identification information of the third AP, whether to modify the RTWT parameter of the at least one RTWT agreement of the second AP based on the RTWT parameter of the second RTWT agreement. For example, if the second AP determines, based on the identification information of the third AP, that the second AP and the third AP do not interfere with each other, the second AP may modify the RTWT parameter of the at least one RTWT agreement of the second AP based on the RTWT parameter of the second RTWT agreement. If the second AP determines, based on the identification information of the third AP, that the second AP and the third AP interfere with each other, the second AP does not modify the RTWT parameter of the at least one RTWT agreement of the second AP based on the RTWT parameter of the second RTWT agreement.

The following describes a manner in which the second AP modifies the RTWT parameter of the at least one RTWT agreement of the second AP based on the RTWT parameter of the second RTWT agreement.

In a possible implementation, if an interval between adjacent RTWT SPs included in the RTWT parameter of the at least one RTWT agreement of the second AP is the same as an interval (denoted as a third interval below) between adjacent RTWT SPs included in the RTWT parameter of the second RTWT agreement, but a start time of a 1^{st} RTWT SP included in the RTWT parameter of the at least one RTWT agreement of the second AP is different from a start time (denoted as a third start time below) of a 1^{st} RTWT SP included in the RTWT parameter of the second RTWT agreement, the second AP modifies the RTWT parameter of the at least one RTWT agreement based on the third start time, so that the start time of the 1^{st} RTWT SP included in the RTWT parameter of the at least one RTWT agreement is the same as the third start time; or a duration between the start time and the third start time does not exceed a first duration threshold. For the first duration threshold, refer to the descriptions in S310.

In a possible implementation, if the start time of the 1 ^{st} RTWT SP included in the RTWT parameter of the at least one RTWT agreement of the second AP is the same as the third start time, but an interval between adjacent RTWT SPs included in the RTWT parameter of the at least one RTWT agreement of the second AP is different from the third interval, or is not in a multiple relationship with the third interval, the second AP modifies, based on the third interval, the interval between the adjacent RTWT SPs included in the RTWT parameter of the at least one RTWT agreement, so that the interval between the adjacent RTWT SPs included in the RTWT parameter of the at least one RTWT agreement is the same as the third interval; or has a multiple relationship with the third interval.

In a possible implementation, the second AP modifies the RTWT parameter of the at least one RTWT agreement based on the third start time, so that a start time of a 1 ^{st} RTWT SP included in the RTWT parameter of the at least one RTWT agreement is the same as the third start time; or a duration between the start time and the third start time does not exceed the first duration threshold. The second AP modifies, based on the third interval, the interval between the adjacent RTWT SPs included in the RTWT parameter of the at least one RTWT agreement, so that the interval between the adjacent RTWT SPs included in the RTWT parameter of the at least one RTWT agreement is the same as the third interval; or has a multiple relationship with the third interval.

After the second AP modifies the RTWT parameter of the at least one RTWT agreement, the method 500 further includes S530: The second AP sends a third radio frame. For more details on the S530, please refer to S330 in the foregoing method 300.

Optionally, the method 500 further includes: The second AP sends a fifth radio frame to the first AP, where the fifth radio frame is a response frame of the fourth radio frame. Optionally, the fifth radio frame further includes seventh indication information, and the seventh indication information indicates whether the second AP modifies the RTWT parameter of the at least one RTWT agreement of the second AP based on the RTWT parameter of the second RTWT agreement. If the seventh indication information indicates that the second AP does not modify the RTWT parameter of the at least one RTWT agreement of the second AP based on the RTWT parameter of the second RTWT agreement, the seventh indication information may further indicate a reason why the second AP does not modify the RTWT parameter of the at least one RTWT agreement. Alternatively, if the seventh indication information indicates that the second AP does not modify the RTWT parameter of the at least one RTWT agreement of the second AP based on the RTWT parameter of the second RTWT agreement, the fifth radio frame may further include eighth indication information, and the eighth indication information indicates a reason why the second AP does not modify the RTWT parameter of the at least one RTWT agreement.

In this embodiment of this application, the fourth radio frame sent by the first AP includes the RTWT parameter of the second RTWT agreement of the third AP and the identification information of the third AP, so that when the second AP determines, based on the identification information of the third AP, that the second AP and the third AP do not interfere with each other, the second AP modifies, based on the RTWT parameter of the second RTWT agreement, the RTWT parameter of the at least one RTWT agreement of the second AP. This helps implement enhanced transmission in a multi-AP coordination scenario, and improve communication quality. For example, if the second AP modifies, based on the RTWT parameter of the second RTWT agreement, the at least one RTWT parameter of the RTWT agreement of the second AP, so that a start time of an RTWT SP corresponding to the at least one RTWT agreement of the second AP is aligned with a start time of an RTWT SP corresponding to the second RTWT agreement. In this way, a quantity of TXOP interruptions of the first AP and a station associated with the first AP can be reduced, thereby improving communication quality.

It should be understood that embodiments of this application are illustrated with reference to FIG. 3 and FIG. 5 as examples to explain the methods provided by embodiments of this application. The sequence numbers of the foregoing processes do not imply an order of execution. The execution order of each process should be determined by its function and inherent logic, and should not impose any limitations on the implementation process of embodiments of this application.

It should be further understood that in some of the foregoing embodiments, a device (for example, a station or an access point) in an existing network architecture is mainly used as an example for description. It should be understood that a specific form of the device is not limited in embodiments of this application. For example, embodiments of this application are applicable to all future devices that can implement a same function.

It may be understood that, in the foregoing method embodiments, methods and operations implemented by a device (for example, the first AP or the second AP) may also be implemented by a component (for example, a chip or a circuit) of the device.

It can be understood that, to implement the foregoing functions, the access point includes corresponding hardware structures and/or software modules for executing the functions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

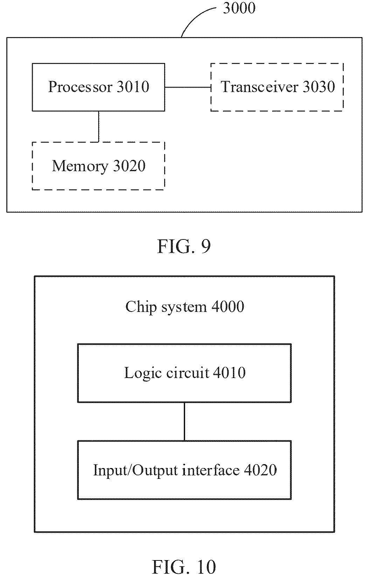

Apparatuses provided in embodiments of this application are described below in detail with reference to FIG. 8 and FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional module division may be performed on the access points based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a block diagram of a communication apparatus according to an embodiment of this application. As shown in FIG. 8, a communication apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a communication unit.

Optionally, the communication apparatus 2000 may further include a storage unit. The storage unit may be configured to store instructions and/or data. The processing unit 2020 may read the instructions and/or the data in the storage unit, so that the communication apparatus implements the foregoing method embodiments.

In a first design, the communication apparatus 2000 may be the first AP in the foregoing embodiments, or may be a component (for example, a chip) of the first AP. The communication apparatus 2000 may implement steps or procedures performed by the first AP in the foregoing method embodiments. The transceiver unit 2010 may be configured to perform sending/receiving-related operations of the first AP in the foregoing method embodiments, and the processing unit 2020 may be configured to perform processing-related operations of the first AP in the foregoing method embodiments.

In a possible implementation, the transceiver unit 2010 is configured to send a first radio frame to a second AP, where the first radio frame is used to request to modify an RTWT parameter of at least one RTWT agreement of the second AP. The transceiver unit 2010 is further configured to receive a second radio frame from the second AP, where the second radio frame is a response frame of the first radio frame.

In another possible implementation, the processing unit 2020 is configured to generate a fourth radio frame, where the fourth radio frame includes an RTWT parameter of a second RTWT agreement of a third AP and identification information of the third AP. The transceiver unit 2010 is configured to send the fourth radio frame.

In a second design, the communication apparatus 2000 may be the second AP in the foregoing embodiments, or may be a component (for example, a chip) of the second AP. The communication apparatus 2000 may implement steps or procedures performed by the second AP in the foregoing method embodiments. The transceiver unit 2010 may be configured to perform sending/receiving-related operations of the second AP in the foregoing method embodiments, and the processing unit 2020 may be configured to perform processing-related operations of the second AP in the foregoing method embodiments.

In a possible implementation, the transceiver unit 2010 is configured to receive a first radio frame from a first AP, where the first radio frame is used to request to modify an RTWT parameter of at least one RTWT agreement of the second AP. The transceiver unit 2010 is further configured to send a second radio frame to the first AP, where the second radio frame is a response frame of the first radio frame.

In another possible implementation, the transceiver unit 2010 is configured to receive a fourth radio frame from the first AP, where the fourth radio frame includes an RTWT parameter of a second RTWT agreement of a third AP and identification information of the third AP. The processing unit 2020 is configured to modify the RTWT parameter of the at least one RTWT agreement of the second AP based on the RTWT parameter of the second RTWT agreement.

It should be understood that a specific process in which the units perform the foregoing corresponding steps is described in detail in the foregoing method embodiments. For brevity, details are not described herein.

It should also be understood that the communication apparatus 2000 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 2000 may be specifically the first AP in the foregoing embodiments, and may be configured to perform the procedures and/or steps corresponding to the first AP in the foregoing method embodiments. Alternatively, the communication apparatus 2000 may be specifically the second AP in the foregoing embodiments, and may be configured to perform the procedures and/or steps corresponding to the second AP in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit.

The communication apparatus 2000 in FIG. 8 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The communication apparatus 2000 in the foregoing solutions has a function of implementing corresponding steps performed by the first AP or the second AP in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

FIG. 9 is a diagram of a structure of a communication apparatus 3000 according to an embodiment of this application. The communication apparatus 3000 includes a processor 3010. The processor 3010 is configured to execute a computer program or instructions stored in a memory 3020, or read data or signaling stored in the memory 3020, to perform the methods in the foregoing method embodiments. Optionally, there are one or more processors 3010.

Optionally, as shown in FIG. 9, the communication apparatus 3000 further includes the memory 3020, and the memory 3020 is configured to store a computer program or instructions and/or data. The memory 3020 may be integrated with the processor 3010, or may be disposed separately. Optionally, there are one or more memories 3020.

Optionally, as shown in FIG. 9, the communication apparatus 3000 further includes a transceiver 3030. The transceiver 3030 is configured to receive and/or send a signal. For example, the processor 3010 is configured to control the transceiver 3030 to receive the signal and/or send the signal.

In a solution, the communication apparatus 3000 is configured to implement operations performed by the first AP in the foregoing method embodiments.

For example, the processor 3010 is configured to execute a computer program or an instruction stored in the memory 3020, to implement related operations of the first AP in the foregoing method embodiments. For example, the method performed by the first AP in the embodiment shown in FIG. 3 or FIG. 5.

In another solution, the communication apparatus 3000 is configured to implement operations performed by the second AP in the foregoing method embodiments.

For example, the processor 3010 is configured to execute a computer program or an instruction stored in the memory 3020, to implement related operations of the second AP in the foregoing method embodiments. For example, the method performed by the second AP in the embodiment shown in FIG. 3 or FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should further be noted that the memory described herein is intended to include, but is not limited to, these and any other appropriate type of memory.

FIG. 10 is a diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

Specifically, for example, if the chip system 4000 is installed on the first AP, the logic circuit 4010 is coupled to the input/output interface 4020, and the logic circuit 4010 may send a first radio frame through the input/output interface 4020. The first radio frame may be generated by the logic circuit 4010. For another example, if the chip system 4000 is installed on the second AP, the logic circuit 4010 is coupled to the input/output interface 4020, the logic circuit 4010 may receive the first radio frame through the input/output interface 4020, and the logic circuit 4010 parses the first radio frame.

In a solution, the chip system 4000 is configured to implement operations performed by the first AP in the foregoing method embodiments.

For example, the logic circuit 4010 is configured to implement the processing-related operations performed by the first AP in the foregoing method embodiments, for example, the processing-related operations performed by the first AP in the embodiment shown in FIG. 3 or FIG. 5. The input/output interface 4020 is configured to implement the sending-and/or receiving-related operations performed by the first AP in the foregoing method embodiments, for example, the sending-and/or receiving-related operations performed by the first AP in the embodiment shown in FIG. 3 or FIG. 5.

In another solution, the chip system 4000 is configured to implement operations performed by the second AP in the foregoing method embodiments.

For example, the logic circuit 4010 is configured to implement the processing-related operations performed by the second AP in the foregoing method embodiments, for example, the processing-related operations performed by the second AP in the embodiment shown in FIG. 3 or FIG. 5. The input/output interface 4020 is configured to implement the sending-and/or receiving-related operations performed by the second AP in the foregoing method embodiments, for example, the sending-and/or receiving-related operations performed by the second AP in the embodiment shown in FIG. 3 or FIG. 5.

An embodiment of this application further provides a computer-readable storage medium. The computer-readable storage medium stores computer instructions for implementing the methods performed by the devices in the foregoing method embodiments.

For example, when the computer program is executed by a computer, the computer is enabled to implement the method performed by the first AP in the foregoing method embodiments.

For another example, when the computer program is executed by a computer, the computer is enabled to implement the method performed by the second AP in the foregoing method embodiments.

An embodiment of this application further provides a computer program product, including instructions. When the instructions are executed by a computer, the method performed by the device (for example, the first AP or the second AP) in the foregoing method embodiments is implemented.

An embodiment of this application further provides a communication system, including the first AP and second AP.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first access point AP, a first radio frame to a second AP, wherein the first radio frame is used to request to modify an RTWT parameter of at least one restricted target wake time RTWT agreement of the second AP; and
receiving, by the first AP, a second radio frame from the second AP, wherein the second radio frame is a response frame of the first radio frame.

2. The method according to claim 1, wherein the RTWT parameter that the first radio frame requests the second AP to modify comprises one or more of the following: a start time of a 1^{st} RTWT service period SP, a minimum duration of an RTWT SP, or an interval between adjacent RTWT SPs.

3. The method according to claim 1 or 2, wherein the first radio frame comprises first indication information, the first indication information indicates a first RTWT agreement of the second AP, and the first radio frame is used to request to modify an RTWT parameter of the first RTWT agreement.

4. The method according to claim 3, wherein the first indication information is an identifier of the first RTWT agreement.

5. The method according to claim 4, wherein the identifier of the first RTWT agreement is carried in a broadcast target wake time TWT identifier field of the first radio frame.

6. The method according to claim 1 or 2, wherein the first radio frame comprises second indication information, the second indication information indicates a modification amount of the RTWT parameter, and the modification amount of the RTWT parameter is used for modification of the RTWT parameter of the at least one RTWT agreement of the second AP, wherein the modification amount of the RTWT parameter comprises one or more of the following: a modification amount of a start time of a 1 ^{st} RTWT SP, a modification amount of a minimum duration of an RTWT SP, or a modification amount of an interval between adjacent RTWT SPs.

7. The method according to claim 6, wherein the modification amount of the RTWT parameter comprises the modification amount of the start time of the 1 ^{st} RTWT SP, and the modification amount of the start time of the 1 ^{st} RTWT SP indicates an amount by which a first start time is advanced, or indicates an amount by which a first start time is delayed, wherein the first start time is a start time of a 1 ^{st} RTWT SP comprised in an RTWT parameter of a first RTWT agreement of the second AP, and the at least one RTWT agreement comprises the first RTWT agreement.

8. The method according to claim 7, wherein the modification amount of the start time of the 1 ^{st} RTWT SP satisfies any one of the following conditions:
a duration between a second start time obtained by modifying the first start time based on the modification amount of the start time of the 1^{st} RTWT SP and a third start time does not exceed a first duration threshold; or
a duration between a second start time obtained by modifying the first start time based on the modification amount of the start time of the 1 ^{st} RTWT SP and a third start time exceeds a second duration threshold, wherein
the third start time is a start time of a 1 ^{st} RTWT SP comprised in an RTWT parameter of a second RTWT agreement of a third AP.

9. The method according to any one of claims 6 to 8, wherein the modification amount of the RTWT parameter comprises the modification amount of the interval between adjacent RTWT SPs, and the modification amount of the interval between adjacent RTWT SPs indicates an amount by which a first interval is increased or indicates an amount by which a first interval is decreased, wherein the first interval is an interval between adjacent RTWT SPs that is comprised in the RTWT parameter of the first RTWT agreement of the second AP, and the at least one RTWT agreement comprises the first RTWT agreement.

10. The method according to claim 9, wherein the modification amount of the interval between adjacent RTWT SPs satisfies any one of the following conditions:
a second interval obtained by modifying the first interval based on the modification amount of the interval between adjacent RTWT SPs is the same as a third interval; or
a second interval obtained by modifying the first interval based on the modification amount of the interval between adjacent RTWT SPs has a multiple relationship with a third interval; or
a second interval obtained by modifying the first interval based on the modification amount of the interval between adjacent RTWT SPs exceeds an interval threshold, wherein
the third interval is an interval between adjacent RTWT SPs comprised in the RTWT parameter of the second RTWT agreement of the third AP.

11. The method according to any one of claims 6 to 10, wherein the modification amount of the RTWT parameter is carried in a TWT offset field of the first radio frame.

12. The method according to claim 8 or 10, wherein the first radio frame further comprises identification information of the third AP.

13. The method according to any one of claims 1 to 12, wherein the first radio frame comprises third indication information, and the third indication information indicates a reason for requesting to modify an RTWT parameter of at least one RTWT agreement of the second AP.

14. The method according to claim 13, wherein the third indication information is carried in a reason code field of the first radio frame.

15. The method according to any one of claims 1 to 14, wherein the second radio frame comprises fourth indication information, and the fourth indication information indicates whether the second AP agrees with the request of the first AP.

16. The method according to claim 15, wherein the fourth indication information indicates that the second AP does not agree with the request of the first AP, and the fourth indication information further indicates a reason why the second AP does not agree with the request of the first AP.

17. A communication method, comprising:
receiving, by a second access point AP, a first radio frame from a first AP, wherein the first radio frame is used to request to modify an RTWT parameter of at least one restricted target wake time RTWT agreement of the second AP; and
sending, by the second AP, a second radio frame to the first AP, wherein the second radio frame is a response frame of the first radio frame.

18. The method according to claim 17, wherein the RTWT parameter that the first radio frame requests the second AP to modify comprises one or more of the following: a start time of a first RTWT service period SP, a minimum duration of an RTWT SP, or an interval between adjacent RTWT SPs.

19. The method according to claim 17 or 18, wherein the first radio frame comprises first indication information, the first indication information indicates a first RTWT agreement of the second AP, and the first radio frame is used to request to modify an RTWT parameter of the first RTWT agreement.

20. The method according to claim 19, wherein the first indication information is an identifier of the first RTWT agreement.

21. The method according to claim 20, wherein the identifier of the first RTWT agreement is carried in a broadcast target wake time TWT identifier field of the first radio frame.

22. The method according to claim 17 or 18, wherein the first radio frame comprises second indication information, the second indication information indicates a first modification amount of the RTWT parameter, and the first modification amount of the RTWT parameter is used for modification of the RTWT parameter of the at least one RTWT agreement of the second AP, wherein the first modification amount of the RTWT parameter comprises one or more of the following: a modification amount of a start time of a 1 ^{st} RTWT SP, a modification amount of a minimum duration of an RTWT SP, or a modification amount of an interval between adjacent RTWT SPs.

23. The method according to claim 22, wherein the first modification amount of the RTWT parameter comprises the modification amount of the start time of the 1 ^{st} RTWT SP, and the modification amount of the start time of the 1 ^{st} RTWT SP indicates an amount by which a first start time is advanced, or indicates an amount by which a first start time is delayed, wherein the first start time is a start time of a 1 ^{st} RTWT SP comprised in an RTWT parameter of a first RTWT agreement of the second AP, and the at least one RTWT agreement comprises the first RTWT agreement.

24. The method according to claim 23, wherein the modification amount of the start time of the 1 ^{st} RTWT SP satisfies any one of the following conditions:
a duration between a second start time obtained by modifying the first start time based on the modification amount of the start time of the 1 ^{st} RTWT SP and a third start time does not exceed a first duration threshold; or
a duration between a second start time obtained by modifying the first start time based on the modification amount of the start time of the 1 ^{st} RTWT SP and a third start time exceeds a second duration threshold, wherein
the third start time is a start time of a 1 ^{st} RTWT SP comprised in an RTWT parameter of a second RTWT agreement of a third AP.

25. The method according to any one of claims 22 to 24, wherein the first modification amount of the RTWT parameter comprises the modification amount of the interval between adjacent RTWT SPs, and the modification amount of the interval between adjacent RTWT SPs indicates an amount by which a first interval is increased or indicates an amount by which a first interval is decreased, wherein the first interval is an interval between adjacent RTWT SPs comprised in the RTWT parameter of the first RTWT agreement of the second AP, and the at least one RTWT agreement comprises the first RTWT agreement.

26. The method according to claim 25, wherein the modification amount of the interval between adjacent RTWT SPs satisfies any one of the following conditions:
a second interval obtained by modifying the first interval based on the modification amount of the interval between adjacent RTWT SPs is the same as a third interval; or
a second interval obtained by modifying the first interval based on the modification amount of the interval between adjacent RTWT SPs has a multiple relationship with a third interval; or
a second interval obtained by modifying the first interval based on the modification amount of the interval between adjacent RTWT SPs exceeds an interval threshold, wherein
the third interval is an interval between adjacent RTWT SPs comprised in the RTWT parameter of the second RTWT agreement of the third AP.

27. The method according to any one of claims 22 to 26, wherein the first modification amount of the RTWT parameter is carried in a TWT offset field of the first radio frame.

28. The method according to claim 24 or 26, wherein the first radio frame further comprises identification information of the third AP.

29. The method according to any one of claims 17 to 28, wherein the first radio frame comprises third indication information, and the third indication information indicates a reason for requesting to modify an RTWT parameter of at least one RTWT agreement of the second AP.

30. The method according to claim 29, wherein the third indication information is carried in a reason code field of the first radio frame.

31. The method according to any one of claims 17 to 30, wherein the second radio frame comprises fourth indication information, and the fourth indication information indicates whether the second AP agrees with the request of the first AP.

32. The method according to claim 31, wherein the fourth indication information indicates that the second AP does not agree with the request of the first AP, and the fourth indication information further indicates a reason why the second AP does not agree with the request of the first AP.

33. The method according to any one of claims 17 to 32, wherein the method further comprises:
sending, by the second AP, a third radio frame, wherein the third radio frame comprises fifth indication information, and the fifth indication information indicates a modified RTWT parameter of the at least one RTWT agreement, or indicates a second modification amount of the RTWT parameter, wherein the second modification amount of the RTWT parameter is used for modification of the RTWT parameter of the at least one RTWT agreement to obtain the modified RTWT parameter of the at least one RTWT agreement.

34. The method according to claim 33, wherein the third radio frame further comprises sixth indication information, and the sixth indication information indicates a time at which the modified RTWT parameter of the at least one RTWT agreement takes effect.

35. A communication apparatus, wherein the communication apparatus comprises a unit configured to perform the method according to any one of claims 1 to 16, or comprises a unit configured to perform the method according to any one of claims 17 to 34.

36. A communication apparatus, comprising:
a processor, configured to execute computer instructions stored in a memory, to enable the communication apparatus to perform the method according to any one of claims 1 to 16, or to enable the communication apparatus to perform the method according to any one of claims 17 to 34.

37. The communication apparatus according to claim 36, wherein the communication apparatus further comprises the memory.

38. The communication apparatus according to claim 36 or 37, wherein the communication apparatus further comprises a communication interface, the communication interface is coupled to the processor, and the communication interface is configured to input and/or output information.

39. A computer-readable storage medium, configured to store a computer program, wherein the computer program comprises instructions used to implement the method according to any one of claims 1 to 16, or comprises instructions used to implement the method according to any one of claims 17 to 34.

40. A computer program, wherein the computer program comprises instructions used to implement the method according to any one of claims 1 to 16, or comprises instructions used to implement the method according to any one of claims 17 to 34.
